# EUROPEAN PATENT APPLICATION

(11) **EP 2 689 876 A1**
(43) Date of publication of application: **29.01.2014**
(21) Application number: 13175575.3
(22) Date of filing: 08.07.2013
(51) Int. Cl.: B23D 45/04

(54) **Saw**

(30) Priority: 23.07.2012 GB 201213048
(71) Applicant: Black & Decker Inc., Newark, Delaware 19711 (US)
(72) Inventor: Ginocchini, Lucio, 06132 Perugia (IT); Bettacchini, Marcello, 06074 PERUGIA (IT); Rossetti, Mirco, 01625 PERUGIA (IT)
(74) Representative: Bell, Ian Stephen

(57) **Abstract**

A saw comprising: a base assembly (2) capable of being placed on a flat work surface; a circular table (4) rotatably mounted on the base assembly; an arm (6) attached to the front of the circular table (4) which extends through a recess (8) formed in the front of the base assembly (2) and then forward of the base assembly (2), the arm being capable moving through a range of angular positions within the recess (8); a bevel mount (16) pivotally mounted on the rear of the circular table; a saw assembly (38) slideably and pivotally mounted on the bevel mount (16) and which is capable of pivoting towards or away from the base assembly and sliding away from or towards the bevel mount (16) to a cut a work piece located on the base assembly, circular table and arm; a motor (108, 110) mounted within the saw assembly; a drive spindle (48) rotatably driven by the motor via a drive mechanism; a cutting blade mounted on the drive spindle; characterised in that, when the saw is placed on a flat work surface, the arm extends forward of the base assembly above the work surface; and wherein there is provided a support (210) attached to the underside of the arm forward of the base assembly, the support being located above the flat work surface.

## Description

The present invention relates to saws and in particular to sliding compound mitre saws.

Sliding compound mitre saws comprise a motor unit pivotally mounted on a base. The motor unit is located above the base and can pivot between a high position where it is located further most away from the base to a low position where a circular saw blade, which is mounted on the motor unit and which is capable of being rotationally driven by a motor located within the motor unit, can engage with a work piece located on the base. A spring biases the motor unit to its upper most position.

Such saws have a sliding feature wherein the motor unit, in addition to be able to perform a pivotal or chopping movement, can slide linearly across the base to perform a slide cut. Furthermore, these types of saw include mechanisms by which they are able to perform mitre and bevel cuts on work pieces located on the base.

These types of saw comprise guards which surround the edge of the saw blade in order to prevent the operator from touching the cutting edge. Typically, such saws comprise a fixed guard which surrounds the cutting edge of the top half of the cutting blade and a pivotal guard which is capable of surrounding the cutting edge of the lower half of the cutting blade. The pivotal guard is capable of being pivoted from a first position where it surrounds the cutting edge of the lower half of the cutting blade to a retracted position where the cutting edge of the lower half of the cutting blade is exposed so that the cutting blade can be used to cut a work piece. The purpose of the pivotal guard is to enable the cutting edge of the lower half of the circular saw blade to be surrounded when the saw blade is not being used to provide protection to the operator whilst allowing the cutting edge of the lower half of the circular saw blade to be exposed when it is required to perform the cutting function.

EP1772221 describes one example of a design sliding compound mitre saw.

Referring to Figure 1, the saw described in EP177221 comprises a base 2 in which is mounted a circular table 4. The circular table 4 can rotate about a vertical axis. An arm 6 is attached to the front of the circular table 4 which extends through a recess 8 formed in the front of the base 2 and then forward of the base 2. As the circular table rotates, the arm 6 swings within the recess 8, the maximum amount of pivotal movement being limited by the sides 10 of the recess 8. A latch 12 is attached to the underside of the end of the arm 6 which is capable of releasably locking the angular position of the arm 6 within the recess 8. A fence 14 is rigidly attached to the base 2 and passes over the circular table 4.

Pivotally attached to the rear of the circular table 4 is a bevel support 16. The bevel support 16 can pivot about a horizontal bevel axis 18. The bevel support 16 can be locked in a range of angular positions relative to the circular table 4 using a locking handle 20.

Pivotally mounted onto the bevel support 16 is a slide support 22. The slide support 22 can pivot about a chopping axis 24 which is parallel to the axis of rotation 26 of a cutting blade 28.

Rigidly mounted within the slide support 22 are the ends of two straight rods 30; 32. The rods 30; 32 are prevented from sliding or rotating within the slide support 22. The rods 30, 32 are located one above the other and are parallel to each other. Attached to the end 34 of the top rod 30 is a spring 36. The other end of the spring 36 is attached to the bevel support 16. The spring 36 is under tension, biasing the end 34 of the top rod 30 downwardly, biasing the ends of the two rods 30, 32 located remotely from the slide support 22 upwardly due to the pivotal connection of the slide support 22 to the bevel support 16.

Slideably mounted onto the two rods 30, 32 is a saw assembly 38.

The saw assembly 38 comprises a motor housing 40 in which is mounted an electric motor. The electric motor is powered via an electric cable 42. Mounted on the front of the motor housing 40 is a handle 44. A trigger switch 46 is mounted within the handle 44, which when depressed, activates the motor. A drive spindle 48 projects from the housing 40. A circular saw blade 28 is rigidly mounted onto the drive spindle 48. When the motor, is activated, the drive spindle rotates, rotatingly driving the saw blade 28. A fixed guard 52 is rigidly mounted onto the motor housing 40 and surrounds the top cutting edge of the saw blade 28. A pivotal guard 54 is pivotally mounted on the motor housing 40 and can pivot about the axis of rotation 26 of the saw blade 28. The pivotal guard 54 can pivot between an enclosed position where it surrounds the lower cutting edge of the saw blade 28 and a retracted position where it exposes the lower cutting edge of the saw blade 28. When the pivotal guard is in the retracted position, it is telescopically pivoted into the fixed guard 52. A pivotal guard spring biases the pivotal guard 54 to the enclosed position.

The saw assembly 38 can slide along the two rods 30, 32 towards or away from the slide support 22.

In use, a work piece is placed on the base 2 and circular table 4 against the fence 14. The pivotal movement of the circular table 4 about the vertical axis allows the saw to perform mitre cuts on the work piece. The pivotal movement of the bevel support 16 in relation to the circular table 4 about the bevel axis 18 allows the saw to perform bevel cuts on the work piece. The pivotal movement of the slide support 22 on the bevel support 16 about the chopping axis 24 allows the saw to perform chop cuts on the work piece. The sliding movement of the saw assembly 38 along the two rods 30, 32 allows the saw to perform sliding cuts on the work piece.

The saw comprises a pivotal guard actuating mechanism. The pivotal guard actuating mechanism causes the pivotal guard to pivot to its retracted position when the saw assembly is pivoted about the chopping axis 24 from its upper position to its lower position. The spring 36 biases the saw assembly 38 to pivot about the chopping axis 24 to its upper most position. In this position, the pivotal guard 54 encloses the lower edge of the cutting blade 28. As the saw assembly is pivoted downwardly towards the circular table 4, the pivotal guard actuating mechanism causes the guard 54 to retract into the fixed guard 52, exposing the lower cutting edge of the blade 28.

Accordingly, there is provided a saw comprising:
a base assembly capable of being placed on a flat work surface;
a circular table rotatably mounted on the base assembly;
an arm attached to the front of the circular table which extends through a recess formed in the front of the base assembly and then forward of the base assembly, the arm being capable moving through a range of angular positions within the recess (8);
a bevel mount pivotally mounted on the rear of the circular table;
a saw assembly slideably and pivotally mounted on the bevel mount and which is capable of pivoting towards or away from the base assembly and sliding away from or towards the bevel mount to a cut a work piece located on the base assembly, circular table and arm;
a motor mounted within the saw assembly;
a drive spindle rotatably driven by the motor via a drive mechanism;
a cutting blade mounted on the drive spindle;
**characterised in that**, when the saw is placed on a flat work surface, the arm extends forward of the base assembly above the work surface; and
wherein there is provided a support attached to the underside of the arm forward of the base assembly, the support being located above the flat work surface.

The embodiment of saw described below discloses a saw assembly slideably mounted on guide rods which in turn are pivotally mounted a bevel mount. However, it will be appreciated that that the invention is also applicable to saw which have the saw assembly pivotally mounted on the end of at least one guide rod, the at least one guide rod being slideably mounted on the bevel mount. EP0752300 discloses such a saw.

An embodiment of the present invention will now be described with reference to the accompanying drawings of which:-
Figure 1 shows a perspective view of a prior art design of saw as disclosed in EP1772221;
Figures 2A and 2B show an exploded view of an embodiment of the saw according to the present invention;
Figure 3 show an exploded view of the pivotal and fixed guard mechanism of the embodiment;
Figure 4 shows a perspective view of the motor unit from a first side;
Figure 5 shows a perspective view of the motor unit from a second side;
Figure 6 shows an exploded view of the motor unit;
Figure 7 shows a perspective view of the dust extraction arrangement;
Figure 8 shows a schematic view of the base housing mounted on the two guide rods;
Figure 9 shows a perspective view of the arm support mechanism;
Figure 10 shows a schematic diagram of the air flow across the motor; and
Figure 11 shows a schematic diagram of the arm located in one of its extreme angular positions within the recess.

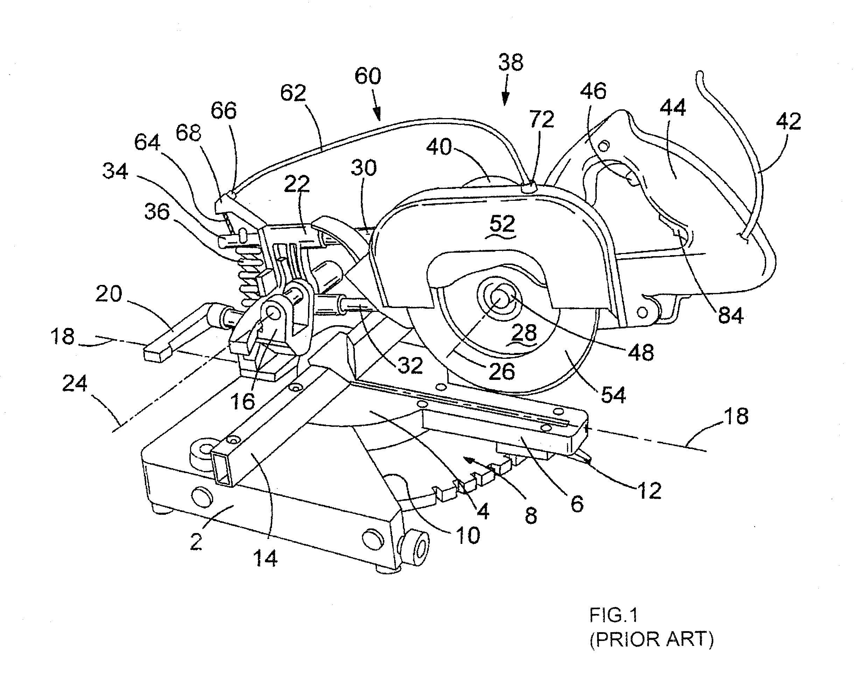

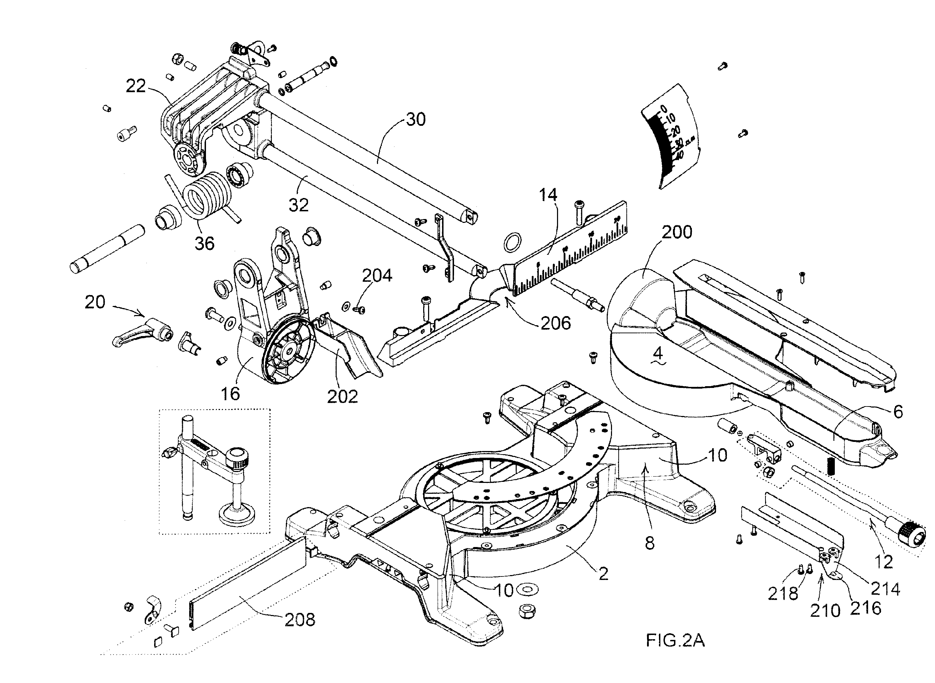

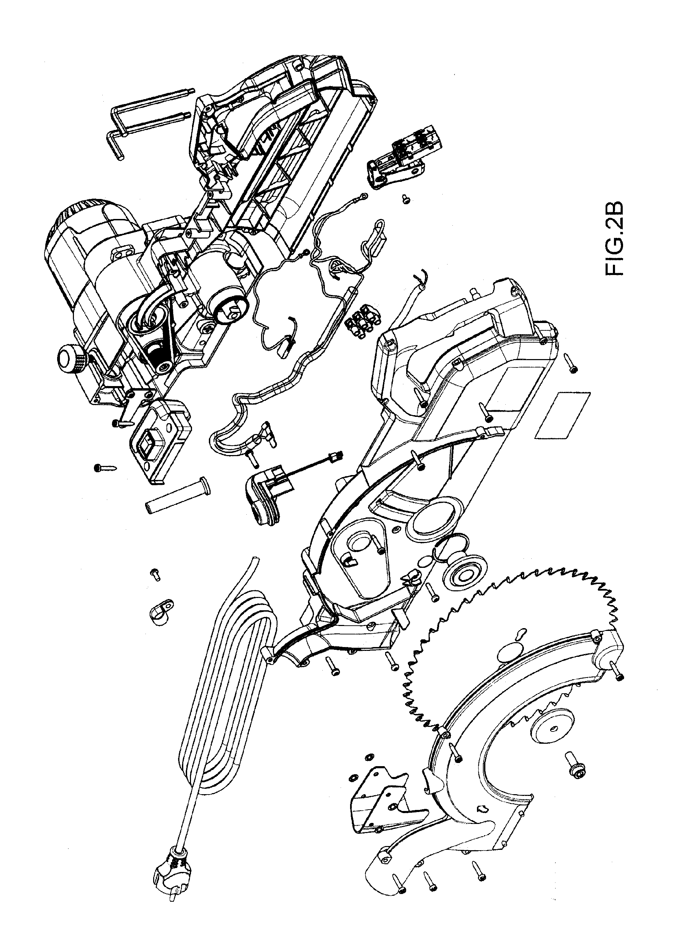

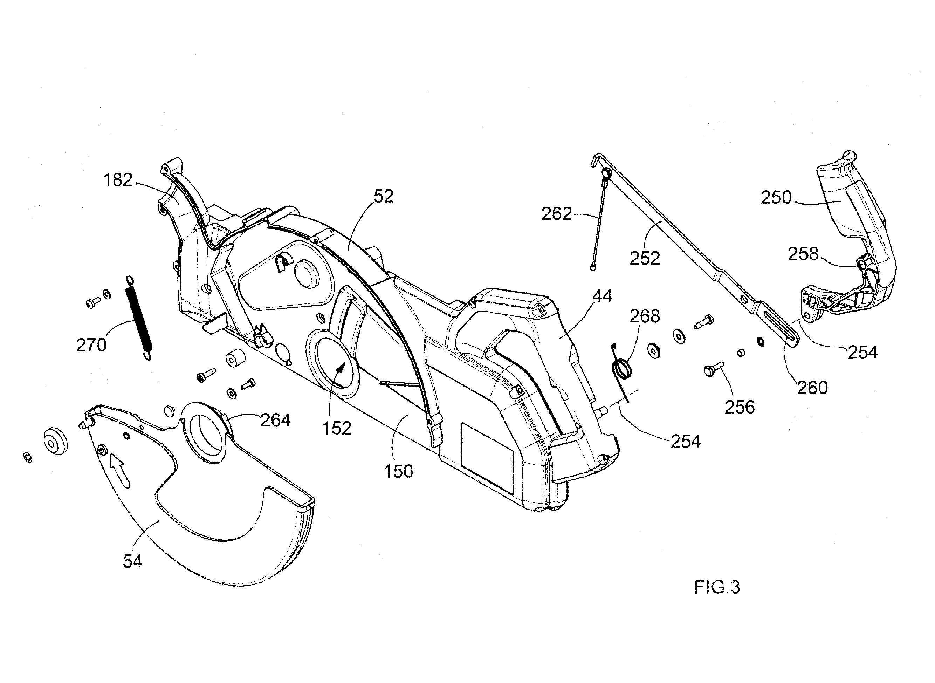

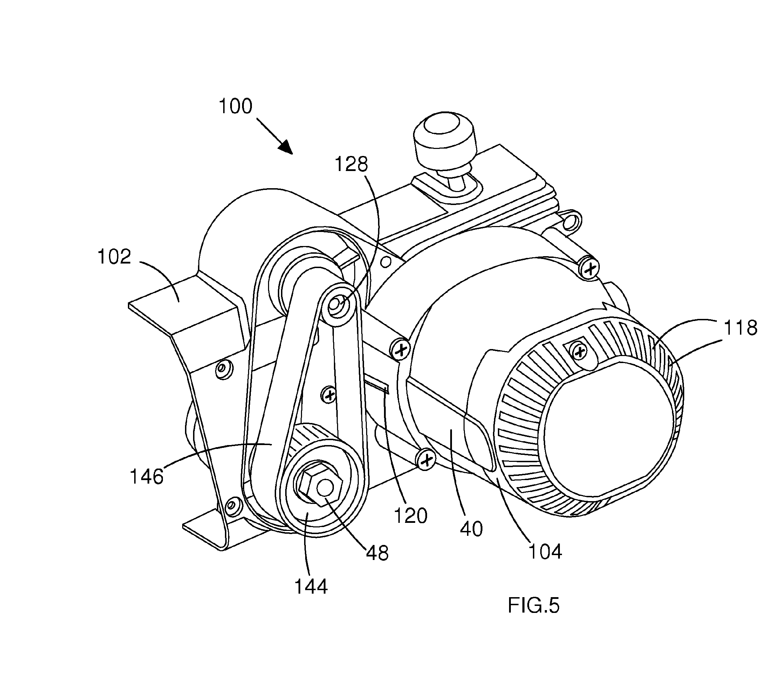

An embodiment of the present invention will now be described with reference to Figures 2 to 11. The general construction of the saw in accordance with the present embodiment is similar to that disclosed in EP1772221. Where the same features are disclosed in Figures 2 to 11 which have been previously disclosed in Figure 1, the same reference numbers have been used.

The saw comprises a base 2 in which is mounted a circular table 4. The circular table 4 can rotate about a vertical axis. An arm 6 is attached to the front of the circular table 4 which extends through a recess 8 formed in the front of the base 2 and then forward of the base 2. As the circular table rotates, the arm 6 swings within the recess 8, the maximum amount of pivotal movement being limited by the sides 10 of the recess 8. A latch 12 is attached to the underside of the end of the arm 6 which is capable of releasably locking the angular position of the arm 6 within the recess 8 in well known manner. A fixed fence 14 is rigidly attached to the base 2 and passes over the circular table 4. A sliding fence 208 is sideably mounted on top of the fixed fence 14 which is capable of sliding in the direction of Arrow M.

Pivotally attached to the rear of the circular table 4 is a bevel support 16. The bevel support 16 can pivot about a horizontal bevel axis. The bevel support 16 can be locked in a range of angular positions relative to the circular table 4 using a locking handle 20.

Pivotally mounted onto the bevel support 16 is a slide support 22. The slide support 22 can pivot about a chopping axis which is parallel to the axis of rotation of a cutting blade 28.

Rigidly mounted within the slide support 22 are the ends of two straight rods 30; 32. Slideably mounted onto the two rods 30, 32 is a saw assembly 38.

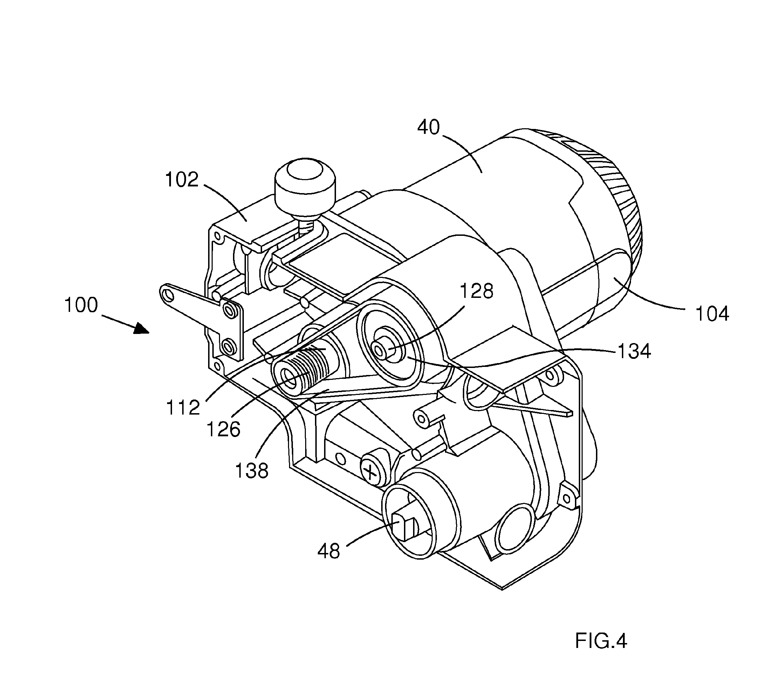

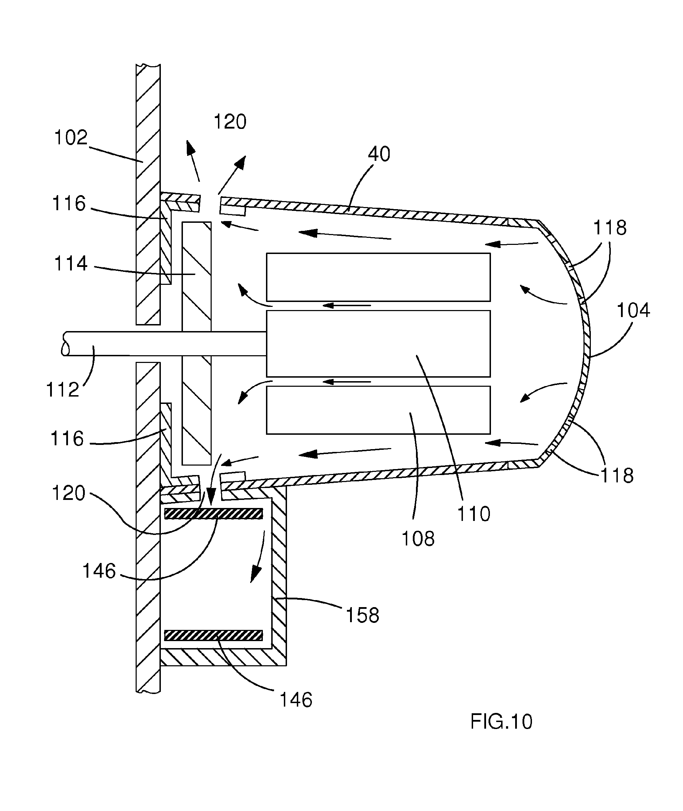

Referring to Figures 2B, 4, 5 and 6, the saw assembly comprises a motor unit 100 as shown in Figures 4 to 6. The motor unit 100 comprises three housings, namely a base housing 102, the motor housing 40 and an end cap 104, which are connected together using bolts 106. A motor is mounted within the motor housing 40 and comprises a stator 108 and an armature 110 rotatably mounted within the stator 108. The armature comprises an output shaft 112 by which the rotary motion of the motor is provided to the saw. A radial fan 114 is rigidly fixed to the output shaft 112 for drawing air over the motor. The fan locates inside a guide ring 116 which is rigidly mounted in the end of the motor housing 40. The fan 114 draws in air through holes 118 form through the end cap 104, across the armature 110 and stator 108 and then expels it side ways through holes 120 formed through the side of the guide ring and motor housing 40 as indicated by arrows shown in Figure 10.

The output shaft 112 projects into the base housing 102 through an aperture 122 in the base housing 102. The output shaft 112 is supported by a bearing 124 located within the aperture 122. A first drive wheel 126 is rigidly mounted on the end of the output shaft 112 inside of the base housing 102.

An intermediate shaft 128 is mounted within a second aperture 130 formed through the base housing 102. The intermediate shaft 128 is supported by a second bearing 132 located within the aperture 130 and is a parallel to the output shaft 112. Located on the end of the intermediate shaft 128 inside of the base housing 102 is a first driven wheel 134. A rubber belt 138 wraps tightly around the first drive wheel 126 and first driven wheel 134 and frictionally engages with them so that rotation of the drive wheel 126 is transferred to the driven wheel 134 via the rotation of the belt 138. As such rotation of the output shaft 112 is transferred to the intermediate shaft 128.

The diameter of the first drive wheel is smaller that that the first driven wheel and therefore the rate of rotation the intermediate shaft 128 is reduced when compared to that of the output shaft 112.

Mounted rigidly on the other end of the intermediate shaft 128 outside of the base housing is a second drive wheel 136. A drive spindle 48 is mounted within a third aperture 140 formed through the base housing 102. The drive spindle 48 is supported by a third bearing 142 located within the aperture 130 and is a parallel to the output shaft 112. Located on the end of the drive spindle 48 outside of the base housing 102 is a second driven wheel 144. A second rubber belt 146 wraps tightly around the second drive wheel 136 and second driven wheel 144 and frictionally engages with them so that rotation of the second drive wheel 136 is transferred to the second driven wheel 144 via the rotation of the second belt 146. As such rotation of the intermediate shaft 128 is transferred to the drive spindle 48.

The diameter of the second drive wheel 136 is smaller that that the second driven wheel 144 and therefore the rate of rotation of the drive spindle 48 is reduced when compared to that of the intermediate shaft 128.

As such rotation of the output shaft 112 is transferred to the drive spindle via the two belts, the speed of the drive spindle 48 being considerably reduced compared to that of the output shaft 112.

Each of the belts 146, 138 can be slightly elastically deformed in a lengthwise direction allowing for impacts and sudden torque changes experienced by the blade during a cutting operation to be damped by the transmission system comprising the belts, thus protecting the motor.

The open end of the base housing 102 is sealed by a first side housing 150 which is rigidly attached to the base housing 102. The first belt 138 is enclosed within the base housing by the first side housing 102. By enclosing the belt 138, no dust or debris generated during the operation of the saw can enter the base housing and interfere with the operation of the belt. The second belt 146 is located outside of the base housing and is enclosed by a cover 158, which forms a chamber for the belt and which is attached to the base housing using a bolt 160. By placing the belt in a chamber, it ensures that air flow over the belt, A hole 152 is formed through the side housing through which the drive spindle 48 projects. A blade 28 can be rigidly mounted on the drive spindle48 using two side plates 154 and a clamp nut 156.

An aperture 120 is formed through the side of the cover 158 which aligns with the apertures 120 in the side of the guide ring and motor housing 40 when it is attached to the base housing 102 as best seen in Figure 10. Air is blown by the fan 114 into the cover 158 and across the belt (as shown in Figure 10) before being expelled through vents 162 in the cover 158. The flow of air across the belt 146 reduces the operating temperature of the belt 146 by about 15 to 20 degrees centigrade.

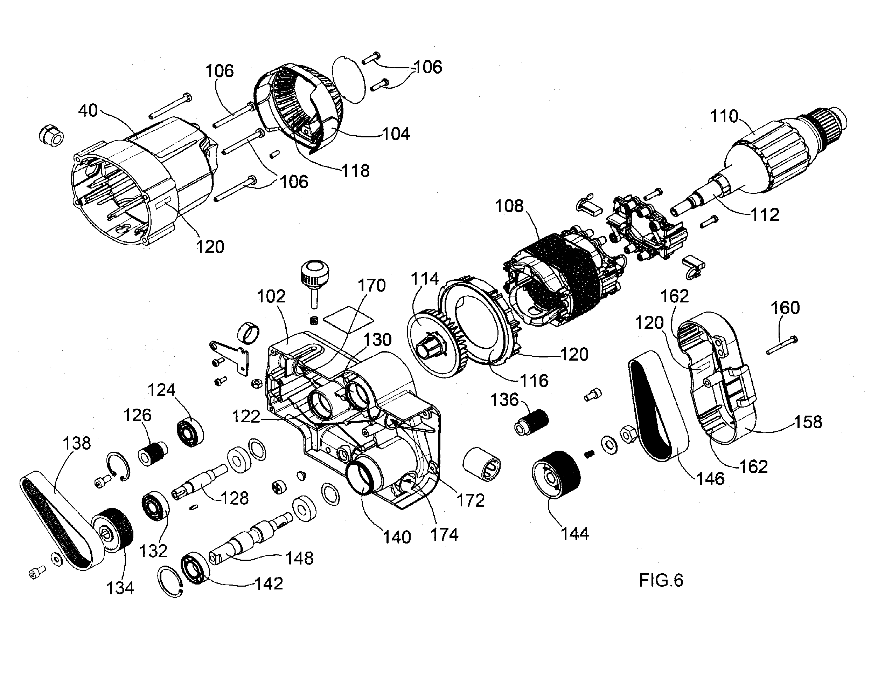

The base housing 102 slideably mounts onto the two guide rods 30, 32 which are rigidly mounted to the slide support 22. The rods 30; 32 are prevented from sliding or rotating within the slide support 22. The rods 30, 32 are located in a vertical plane with one being above the other, and are parallel to each other. The top rod 30 passes through two tubular passageways 170, 172 formed within the base housing 102 as best seen in Figure 6. The lower rod 32 locates in a third tubular passageway 174 within the base housing 102. The base housing 102 can freely slide along the two rods 30, 32.

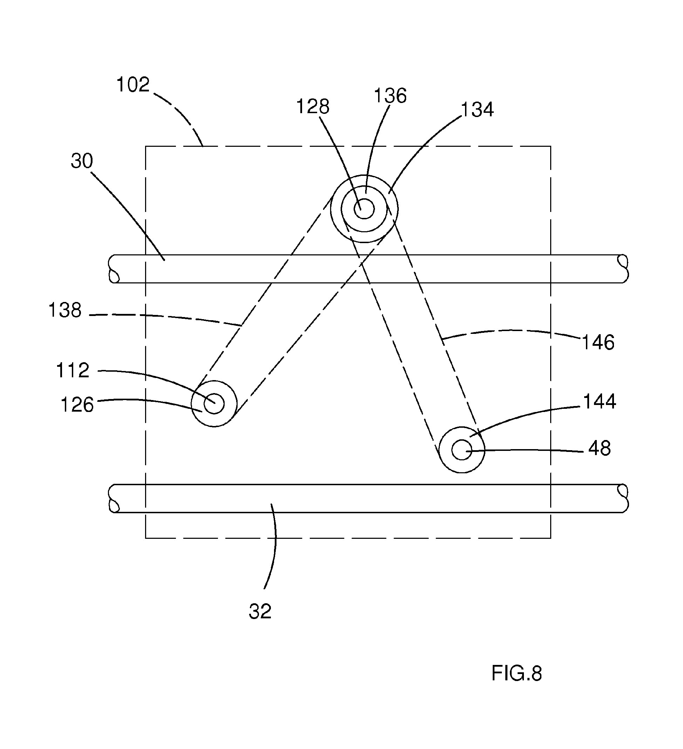

Referring to Figure 8 which shows a schematic view of the base housing 102 mounted on the two guide rods 30, 32, the output shaft 112 passes between the two guide rods 30, 32, in a direction perpendicular to the plane within which the rods 30, 32 are located, the first belt 138 being located on the opposite side of the plane within which the rods 30, 32 are located to the motor. The intermediate shaft 128 is located above and passes over the two guide rods 30, 32 in a direction perpendicular to the plane within which the rods 30, 32 are located, the second belt 146 being located on the opposite side of the plane within which the rods 30, 32 are located to the first belt 138. The drive spindle 48 passes between the two guide rods 30, 32 in close proximity to the lower rod 32 in a direction perpendicular to the plane within which the rods 30, 32 are located, the blade being located on the opposite side of the plane within which the rods 30, 32 are located to the motor. This provides a compact arrangement whilst maximising the depth of cut.

The first side housing 150, which is rigidly attached to the base housing 102, attaches to a second side housing 180 using bolts 184 to form the fixed guard 52 and a dust chute 182. During the cutting operation, dust and debris are driven through the dust chute 182 by the rotary motion of the cutting blade 28. An inner wall 186 is mounted within the first and second side housings to assist in guiding the dust and debris. A separate vacuum cleaner can be attached to the chute 182 to assist in the removal of the dust and debris.

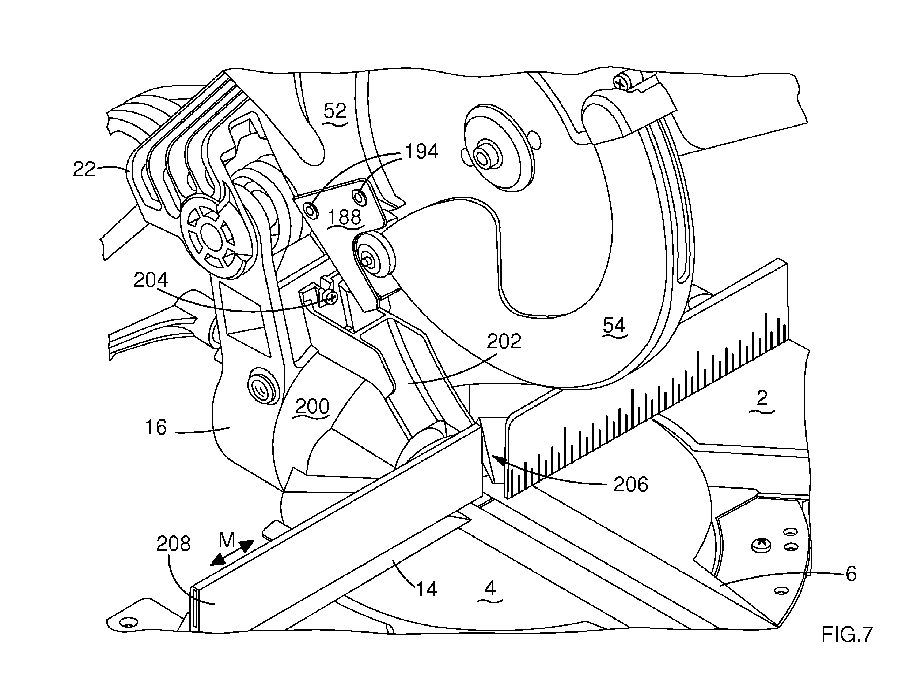

A rubber chute 188 is attached to lower rear end of the fixed guard 52 by the insertion of pegs 190 attached to the fixed guard 58 locating within holes 192 formed in the rubber chute and then being secured using clips 194 which attach to the ends of the pegs 190 as best seen in Figure 7. The rubber chute assists in guiding dust and debris generated by the cutting action of the blade at the rear of the blade into the fixed guard 52 and towards the dust chute 182. When the saw assembly 38 is located in its lowest position, the rubber chute 188 extends downwardly to a position where it is just able to pass of over the fixed and moveable fences 14, 208 as the saw assembly slides back and fourth on the rods 30, 32.

The bevel support 16 attaches to the rear of the circular table 4 adjacent a circular support 200 integrally formed with the circular table 4. Attached to the bevel support 16 using a screw 204 is a plastic guide chute 202 and which faces towards the rear of the blade. When the saw assembly 38 is located in its lowest rearward position, the rubber chute 188 is located behind the fence 14 in alignment with the plastic chute 202 so that the rubber chute 188 and plastic guide chute act as a single combined chute. When the saw assembly 38 is located in its lowest rearward position, the rear lower part of the saw blade 28 passes through the centre gap 206 of the fence 214 and rearwardly of the fence 14 in close proximity of the plastic guide chute 202. The combined chute acts to guide dust and debris generated by the cutting action of the blade 28 at the rear of the blade into the fixed guard 52 and towards the dust chute 182.

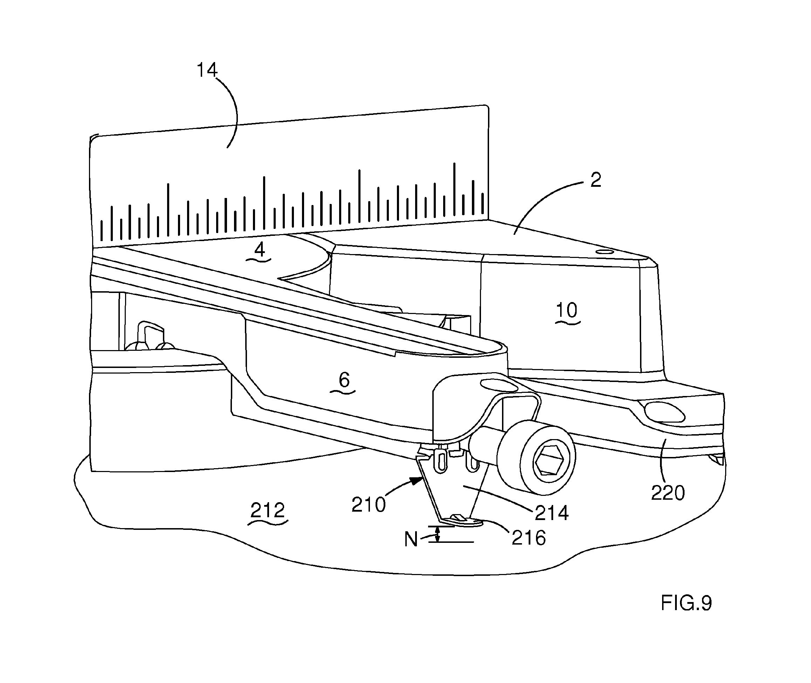

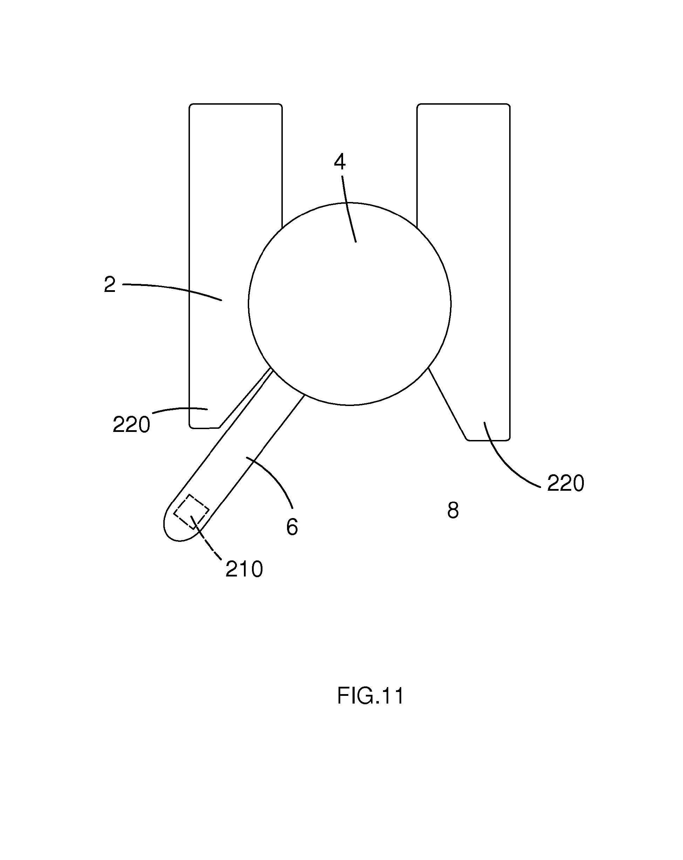

The arm 6, which extends forward of the base 2, has an L shaped support 210 attached to its underside of the end of the arm remote from the circular table 6 using screws 218 as best seen in Figure 9. The L shaped support 210 comprises a vertical plate 214 and a perpendicular horizontal plate 216 connected to its lower end. When the saw is located on a flat work surface 212, the horizontal plate 216 is located 4mm above the work surface 21 indicated by Arrow N. When the saw assembly is located in its forward most position, remote from the bevel support 16, with the blade located at its further extent towards the end of the arm 6 remote from the circular table 4, and a downward pressure is being exerted to cut a work piece, there is a force exerted onto the saw which can cause it to tip forward. In such circumstances the arm 6 will pivot forwards until the L shape support 210 engages with the work surface 212 preventing any further movement. Under normal circumstances it is desirable that the arm 6 and support 210 is located above the work surface to enable them to be freely rotated within the base 2 about a vertical axis. 4mm is the ideal distance to allow free movement of the arm over the surface whilst allowing limited forward movement of the saw when tipping forward. The length of the arm 6 and the location of the L shaped support 210 on the arm 6 are such that when the arm is pivoted to its extreme angular positions within the recess 8, the L shaped support is able to pass in front of and locate forward of the front side sections 220 of the base 2 as shown in Figure 11.

A light aperture 240 is formed in the top of the fixed guard 52. A light unit 242 comprising an LED is mounted on the outside of the fixed guard 52 so that the light of the LED shines through the light aperture 240 inside of the fixed guard, the light passing on either side of the blade 28. When the pivotal guard 54 is retracted inside of the fixed guard 54, the light is able to pass the blade and shine onto the circular table 4 and arm 6, the blade casting a shadow on the circular table 4 and arm 6. When a work piece is located on the circular table 4 and arm 6, the shadow is cast onto the work piece and provides an indication of where the blade 28 will contact the work piece when it is moved towards the work piece to cut it.

A power supply 244 is to the top of the saw assemble and connects to the light unit via a cable 246. A switch 248 on the power supply 244 is used to switch the LED on and off. The power supply is power by electricity provide through the cable 42.

The pivotal guard 54 is pivoted inside the fix guard 52 using a guard actuation mechanism comprising a lever 250 pivotally mounted on the handle 44 about an axis 254, an elongate rod 252 pivotally attached at one end to the lever 250 via a bolt 256 which passes through a slot 260 formed in the rod 252 and screws into a threaded recess 258 and which is axially slideable within the saw assembly, and a cable 262 attached to the other end of the elongate rod 252 and to the pivotal guard. The cable 262 wraps around a circular inner wall 264 formed on the pivotal guard 52 before attaching to it. Pivotal movement of the lever 250 results in a sliding movement of the elongate rod 252 which in turn pulls on the cable 262. As the cable is wrapped around the inner wall, as it is pulled it causes the pivotal guard to rotate thus pivoting it inside of the fixed guard and exposing the blade 28. A spring 268 biases the lever 2590 away from the handle 44. A second spring 270 biases the pivotal guard shut. The slot 260 allows for movement of the guard 54 without movement of the lever 250.

## Claims

1. A saw comprising:
a base assembly (2) capable of being placed on a flat work surface;
a circular table (4) rotatably mounted on the base assembly;
an arm (6) attached to the front of the circular table (4) which extends through a recess (8) formed in the front of the base assembly (2) and then forward of the base assembly (2), the arm being capable moving through a range of angular positions within the recess (8);
a bevel mount (16) pivotally mounted on the rear of the circular table;
a saw assembly (38) slideably and pivotally mounted on the bevel mount (16) and which is capable of pivoting towards or away from the base assembly and sliding away from or towards the bevel mount (16) to a cut a work piece located on the base assembly, circular table and arm;
a motor (108, 110) mounted within the saw assembly;
a drive spindle (48) rotatably driven by the motor via a drive mechanism;
a cutting blade mounted on the drive spindle;
**characterised in that**, when the saw is placed on a flat work surface, the arm extends forward of the base assembly above the work surface; and
wherein there is provided a support (210) attached to the underside of the arm forward of the base assembly, the support being located above the flat work surface.

2. A saw as claimed in claim 1 wherein the support is located 4mm above the flat work surface.

3. A saw as claimed in either of claims 1 or 2 wherein the support is L shaped.

4. A saw as claimed in claim 3 wherein the L shaped support 210 comprises a vertical plate 214 and a perpendicular horizontal plate 216 connected to its lower end.

5. A saw as claimed in any one of the previous claims wherein it is attached to the underside of the arm at the end of the arm remote from the circular table (6).

6. A saw as claimed in any one of the previous claims wherein the length of the arm (6) and the location of the support (210) on the arm (6) are such that when the arm is pivoted to its extreme angular positions within the recess (8), the support is able to pass in front of and locate forward of front side sections (220) of the base (2).

7. A saw as claimed in any of the previous claims wherein the saw assembly is slideably mounted on at least one guide rod (30, 32), the guide rod being rigidly attached to a slide support (22) which is pivotally attached to the bevel mount.

8. A saw as claimed in claim 7 wherein the saw assembly is slideably mounted on two parallel guide rods.
